# EUROPEAN PATENT APPLICATION

(11) **EP 4 671 847 A1**
(43) Date of publication of application: **31.12.2025**
(21) Application number: 25184046.8
(22) Date of filing: 19.06.2025
(51) Int. Cl.: G02B 27/00, G02B 27/01, H04N 13/344

(54) **IMAGE DISPLAY APPARATUS AND ADJUSTMENT METHOD THEREOF**

(30) Priority: 27.06.2024 JP 2024104165
(71) Applicant: CANON KABUSHIKI KAISHA, Tokyo 146-8501 (JP)
(72) Inventor: NAGATA, Taiga, Tokyo, 146-8501 (JP); MORITA, Hiromitsu, Tokyo, 146-8501 (JP); ATSUTA, Akio, Tokyo, 146-8501 (JP)
(74) Representative: Canon Europe Limited

(57) **Abstract**

An image display apparatus includes image display parts, optical elements, and a movement driving unit for changing relative positions of the image display parts and the optical elements. The movement driving unit includes an estimated value acquisition unit for acquiring an estimated value with respect to a change of relative positions of the image display parts and the optical elements, an allowable value acquisition unit for acquiring an allowable value with respect to a change of a position, and a control mode selection unit for selecting any one of a plurality of control modes for controlling the movement driving unit based on a result of comparison between the estimated value and the allowable value.

## Description

### BACKGROUND

### Field of the Invention

The present disclosure relates to an image display apparatus and an adjustment method thereof.

### Description of the Related Art

An image display apparatus mounted on a user's head and an image display apparatus worn on the user's eyes just like a pair of glasses are provided. The image display apparatus has display units arranged in the vicinities of the user's eyes, and executes display processing for displaying a parallax image on the display units respectively corresponding to the user's right and left eyes. The parallax image includes depth information indicating whether the user is looking at a far distance or a near distance, and the user can acquire a stereoscopic image of an object displayed in the parallax image by visually recognizing the displayed parallax image.

In this image display apparatus, a user's line-of-sight is adjusted to a position of the stereoscopic image generated from the images displayed on the display units corresponding to the right and the left eyes. At this time, a focal position is fixed to the image displayed on each of the right and left display screens. In this case, the user is brought into an unnatural state never caused when the user visually recognizes a real object. Therefore, for example, a technique discussed in Japanese Patent Application Laid-Open No.2023-32278 has been developed. In the technique discussed in Japanese Patent Application Laid-Open No.2023-32278, visibility adjustment is executed on depth information according to a position of a user's gazing point when the user is looking at the image, by driving optical elements included in a display optical system depending on an individual difference and a use condition of the image display apparatus. In this way, it is possible to reduce a sense of discomfort which the user experiences when looking at the stereoscopic image.

When the visibility adjustment is executed on the depth information according to the position of the user's gazing point when the user is looking at the image, the optical elements are moved by a driving distance according to a depth change amount. At this time, it is desirable to make the user be less aware of the driving operation executed on the optical elements as much as possible. Therefore, it is necessary to complete the driving operation of the optical elements within a response lag time of the human eyes. The response lag time is a lag time before the human eyes start responding. In the response lag time, the human eyes cannot respond.

However, a driving time may exceed the user's response lag time when a driving distance of the optical elements is great. In this case, the user is aware of the changes of the focus and the angle of view caused by the driving operation executed on the optical elements. The user has a sense of discomfort when the user is aware of the driving operation executed on the optical elements. The above-described situation may also be an issue when the apparatus configuration discussed in Japanese Patent Application Laid-Open No.2023-32278 is employed.

The present disclosure is directed to an image display apparatus capable of displaying a sharp image by executing visibility adjustment without making a user be aware of changes of a focus and an angle of view of the image caused by relative movement of image display parts (i.e. image output means) and optical elements, and an adjustment method thereof.

### SUMMARY

According to a first aspect of the present invention, there is provided an image display apparatus as specified in claims 1 to 13. According to a second aspect of the present invention, there is provided an adjustment method as specified in claim 14.

Further features of the present invention will become apparent from the following description of embodiments with reference to the attached drawings.

### BRIEF DESCRIPTION OF THE DRAWINGS

Fig. 1 is a block diagram schematically illustrating a general configuration of an image display apparatus according to a first embodiment.
Figs. 2A and 2B are schematic diagrams illustrating a state where optical elements are moved by visibility change driving units.
Figs. 3A and 3B are schematic diagrams illustrating a user and a spherical object seen from the above.
Figs. 4A and 4B are schematic diagrams illustrating a user and a spherical object seen from the above.
Figs. 5A and 5B are characteristic diagrams illustrating a relationship between a response lag time and a driving time.
Fig. 6 is a characteristic diagram illustrating transition of a driving speed when driving operation of the optical elements is executed.
Figs. 7A and 7B are characteristic diagrams illustrating transition of a driving speed when driving operation of the optical elements is executed.
Figs. 8A and 8B are characteristic diagrams illustrating a state where a first control mode or a second control mode is selected by comparing an allowable driving time and an estimated driving time.
Fig. 9 is a flowchart illustrating a visibility adjustment method executed by the image display apparatus according to the first embodiment.
Fig. 10 is a block diagram schematically illustrating a general configuration of an image display apparatus according to a second embodiment.
Fig. 11 is a flowchart illustrating a visibility adjustment method executed by the image display apparatus according to the second embodiment.

### DESCRIPTION OF THE EMBODIMENTS

### - Basic Configuration of Image Display Apparatus according to Embodiments -

In order to specifically disclose embodiments, a basic configuration of the image display apparatus according to the embodiments is described as follows.

The image display apparatus includes image display parts (i.e. image output means), optical elements, and a movement driving unit for changing the relative positions of the image display parts and the optical elements. The movement driving unit includes an estimated value acquisition unit, an allowable value acquisition unit, and a control mode selection unit. The estimated value acquisition unit acquires an estimated value with respect to a change of the relative positions. The allowable value acquisition unit acquires an allowable value with respect to a change of the relative positions. The control mode selection unit selects any one of a plurality of control modes for controlling the movement driving unit based on a result of comparison between the estimated value and the allowable value. By appropriately selecting a control mode based on a result of comparison between the estimated value and the allowable value, the image display apparatus can display a sharp image by adjusting a focus distance to a stereoscopic image using parallax, without making a user be aware of the changes of the focus and the angle of view of the image caused by the operation for relatively driving the image display parts and the optical elements.

Specifically, at least one of a value of an estimated driving distance for a change of relative positions and a value of an estimated driving time necessary for the change of the relative positions is used as the estimated value. At least one of a value of an allowable driving distance for the change of the relative positions and a value of an allowable driving time necessary for the change of the relative positions is used as the allowable value.

The image display apparatus according to the present disclosure further includes a line-of-sight detection unit for detecting a change of a user's line-of-sight of direction. The movement driving unit further includes a line-of-sight position acquisition unit for acquiring a line-of-sight position from a detection result acquired by the line-of-sight detection unit, a storage unit for storing the line-of-sight position, and a line-of-sight change amount acquisition unit for acquiring a line-of-sight change amount from the line-of-sight position acquired by the line-of-sight position acquisition unit and the line-of-sight position stored in the storage unit. In the above-described configuration, a control mode is selected with consideration for a line-of-sight movement lag time acquired from the line-of-sight change amount. It is possible to realize an image display apparatus capable of displaying a sharp image by adjusting a focus distance to a stereoscopic image using parallax, without making a user be aware of the changes of the focus and the angle of view of the image caused by the operation for relatively driving the image display parts and the optical elements more reliably.

### - Specific Description of Embodiments -

Hereinafter, the embodiments according to the present disclosure are described in detail with reference to the appended drawings. The below-described embodiments are not intended to limit the present invention according to the scope of the patent claims. Each of the embodiments of the present invention described below can be implemented solely or as a combination of a plurality of the embodiments or features thereof where necessary or where the combination of elements or features from individual embodiments is beneficial. Although a plurality of features is described in the embodiments, not all of the features are essentially required, and the features may be optionally combined. Further, in the appended drawings, the same reference numerals are applied to the constituent elements identical or similar to each other, and duplicative descriptions are omitted.

Hereinafter, a first embodiment of the present disclosure is described.

### (Configuration of Image Display Apparatus)

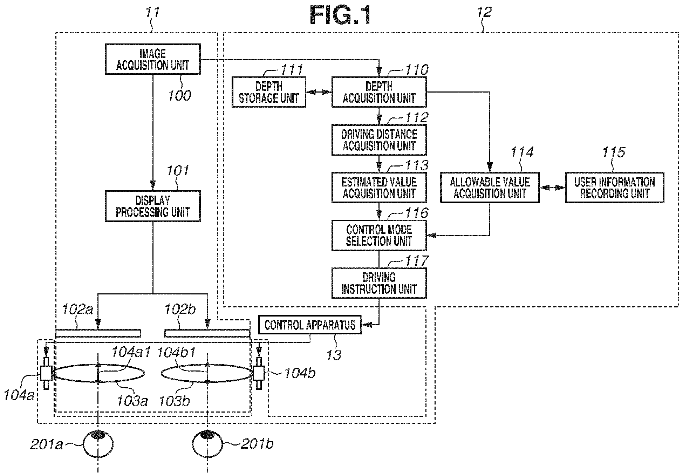

Fig. 1 is a block diagram schematically illustrating a general configuration of the image display apparatus according to the present embodiment.

The image display apparatus includes an image display unit 11 for displaying an image, a movement driving unit 12, and a control apparatus 13. The control apparatus 13 generally controls the image display unit 11 and the movement driving unit 12.

An image display apparatus mounted on a user's head and an image display apparatus worn on the user's eyes just like a pair of glasses are provided. In any of the above-described types, the image display apparatus can be fixed in the vicinities of the left eye 201a and the right eye 201b of the user. In Fig. 1, the left eye 201a and the right eye 201b are illustrated. Then, constituent elements related to the left eye 201a and the right eye 201b are distinguished from each other by adding a symbol "a" to a reference numeral of a constituent element related to the left eye 201a and a symbol "b" to a reference numeral of a constituent element related to the right eye 201b.

The image display unit 11 includes an image acquisition unit 100, a display processing unit 101, a pair of image display parts 102a and 102b, and a pair of optical elements 103a and 103b.

The image acquisition unit 100 acquires display image data via an external apparatus and a network. The display processing unit 101 executes display magnification adjustment processing on the image data acquired by the image acquisition unit 100. The image data processed by the display processing unit 101 is transmitted to and displayed on the image display parts 102a and 102b. For example, the image data is divided into pieces of image data to be displayed on the image display parts 102a and 102b. However, the configuration is not limited to the above, and a screen of one image display part 102a (102b) may be divided into two screens, and the image data may be displayed on each of the divided screens. By executing the above-described image processing appropriate for the right and the left eyes, the user can see the image without having a sense of discomfort. Each of the optical elements 103a and 103b includes a lens corresponding to each of the left eye 201a and the right eye 201b. An image displayed on each of the image display parts 102a and 102b is displayed for the corresponding left eye 201a and the corresponding right eye 201b through the optical elements 103a and 103b.

The movement driving unit 12 is a movement driving unit for changing the relative positions of the image display parts 102a and 102b and the optical elements 103a and 103b. In the present embodiment, the movement driving unit 12 moves the optical elements 103a and 103b with respect to the image display parts 102a and 102b. The movement driving unit 12 includes visibility change driving units 104a and 104b, a depth acquisition unit 110, a depth storage unit 111, a driving distance acquisition unit 112, an estimated value acquisition unit 113, an allowable value acquisition unit 114, a user information recording unit 115, a control mode selection unit 116, and a driving instruction unit 117.

In the above-described image display unit 11 and the movement driving unit 12, the image acquisition unit 100, the display processing unit 101, the depth acquisition unit 110, the driving distance acquisition unit 112, the estimated value acquisition unit 113, the allowable value acquisition unit 114, the control mode selection unit 116, and the driving instruction unit 117 are acquired as follows. In other words, these constituent elements are implemented by a program read and executed by one or more processors such as a central processing unit (CPU).

Each of the visibility change driving units 104a and 104b includes a vibration type actuator having a driving source such as an ultrasonic motor. The visibility change driving units 104a and 104b are respectively connected to the optical elements 103a and 103b, and execute the operation for moving the optical elements 103a and 103b. Each of the optical elements 103a and 103b is moved by each of the visibility change driving units 104a and 104b, within a section along the optical axis of each of the optical elements 103a and 103b (indicated by arrows 104a1 and 104b1). Each of the visibility change driving units 104a and 104b has a position detection sensor, and acquires information about a position within the section of each of the optical elements 103a and 103b by using the position detection sensors.

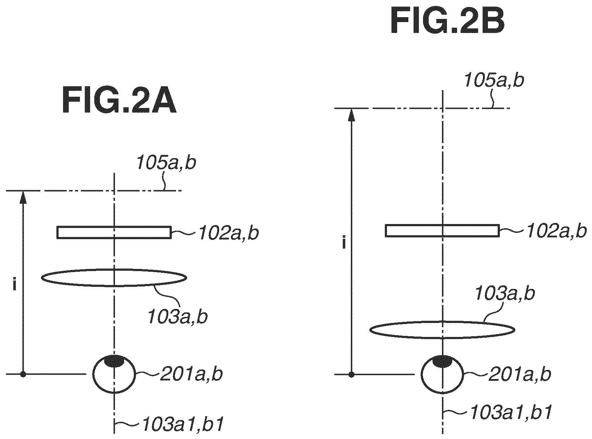

Figs. 2A and 2B are schematic diagrams illustrating a state where the optical elements 103a and 103b are moved by the visibility change driving units 104a and 104b. Fig. 2A illustrates a state where the optical element 103a (103b) is moved to a region in a vicinity of the image display part 102a (102b), and Fig. 2B illustrates a state where the optical element 103a (103b) is moved to a region in a vicinity of the eye 201a (201b).

The user of the image display apparatus, i.e., an observer, visually recognizes a virtual image 105a (105b) when the user looks at the image display part 102a (102b) with the user's eye 201a (201b) through the optical element 103a (103b). Based on a position of the user's eye 201a (201b), a position of the virtual image 105a (105b) in a direction parallel to the optical axis 103a1 (103b1) is defined as a virtual image forming position i.

As illustrated in Figs. 2A and 2B, the virtual image forming position i can be changed by changing the position of the optical element 103a (103b). For example, the virtual image forming position i becomes close to the eye 201a (201b) when the optical element 103a (103b) moves closer to the image display part 102a (102b). On the other hand, the virtual image forming position i becomes far from the eye 201a (201b) when the optical element 103a (103b) moves closer to the eye 201a (201b). Accordingly, by making the optical element 103a (103b) move by the visibility change driving unit 104a (104b), it is possible to adjust visibility, that is, the user can see a far-distance image and a near-distance image without defocusing depending on the eyesight of the user's eye 201a (201b). In addition, a displayed image has depth information indicating whether a gazing point is far or near. The user can clearly see the image when the depth information conforms to the user's visibility.

When the user sees the image, a depth change of the gazing point occurs in two ways, i.e., a depth change occurring with/without a change of the user's line-of-sight direction.

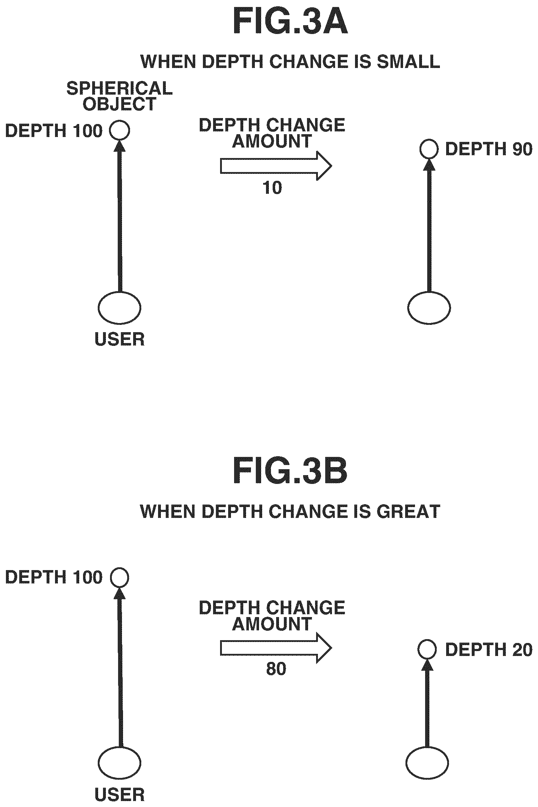

A depth change of the gazing point without a change of the user's line-of-sight direction is described with reference to Figs. 3A and 3B. Figs. 3A and 3B are schematic diagrams illustrating a user and a spherical object seen from the above. Fig. 3A illustrates a state where the spherical object present at the gazing point is moved to a position having a depth of 90 from a position having a depth of 100, while the user's line-of-sight is directed to the center and remains unchanged. The user's gazing point is continuously fixed to the spherical object. One side close to the user is called a near side, whereas another side far from the user is called a far side. Herein, a value of the depth is expressed as a relative value, not as an absolute value, and the value becomes smaller as the gazing point moves closer to the near side.

An arrow extending to the spherical object from the user indicates the user's line-of-sight direction. The spherical object moves in a near-side direction while the user is continuously gazing at the spherical object located on a central part on the front side. At this time, although the line-of-sight direction is not changed, a depth of the gazing point is changed. In a case where a depth of the spherical object before move is 100 and a depth of the spherical object after move is 90, a depth change amount is 10. The optical element 103a (103b) is driven by a driving distance based on the depth change amount. Normally, a driving speed of the optical element 103a (103b) is set to a maximum drivable speed. This is because a timing when the focus is not adjusted to a displayed parallax image occurs if a driving speed is low. In a case where a depth change amount is small, a driving time necessary to drive the optical element 103a (103b) is short.

Fig. 3B illustrates a case where a depth change amount is great. The spherical object is moved to a position having a depth of 20 from a position having a depth of 100. The depth change illustrated in Fig. 3B may occur when a moving speed of a spherical object is high, when a spherical object is suddenly displayed right in front of the eyes because one scene captured in the image is switched to another, or when another spherical object suddenly appears right in front of the eyes. In this case, only a depth of the gazing point is changed while the user's line-of-sight direction remains unchanged. In the example illustrated in Fig. 3B, a depth change amount is 80, so that a driving distance becomes greater than a driving distance in Fig. 3A. In a case where the optical element 103a (103b) is driven at a speed that is the same as the speed in Fig. 3A, a driving time is increased by an amount corresponding to the increased driving distance. As described above, there is a case where a depth of the gazing point is changed even though the user's line-of-sight direction remains unchanged.

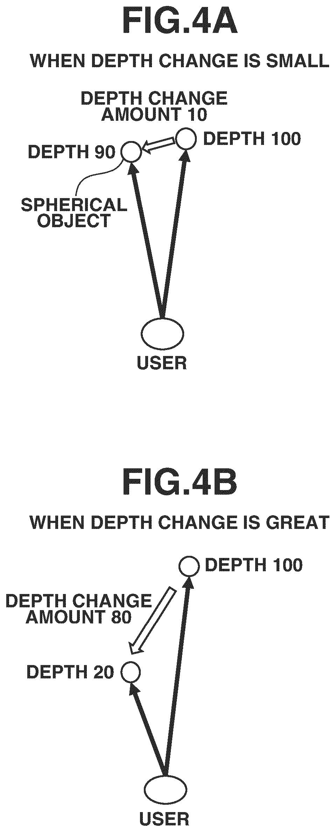

Next, a depth change occurring along with a change of the user's line-of-sight direction is described with reference to Figs. 4A and 4B. Figs. 4A and 4B are schematic diagrams illustrating a user and a spherical object seen from the above. Fig. 4A illustrates a state where the user's gazing point is moved to a spherical object located at a position having a depth of 90 from a spherical object located at a position having a depth of 100. The above-described state may occur when a spherical object located at a position having a depth of 100 moves to a position having a depth of 90, and when the line-of-sight direction is changed from a spherical object located at a position having a depth of 100 to another object located at a position having a depth of 90. In this case, a depth is changed along with a change of the line-of-sight direction.

A depth change amount in Fig. 4A is 10. Fig. 4B illustrates a state where the user's gazing point is moved to a spherical object located at a position having a depth of 20 from a spherical object located at a position having a depth of 100. A depth change amount in Fig. 4B is 80, so that a driving distance becomes greater than a driving distance in Fig. 4A. In Fig. 4B, a driving time becomes long in a case where the optical element 103a (103b) is driven at a speed that is the same as the speed in Fig. 4A.

As described above, there is a case where a depth is changed along with a change of the user's line-of-sight direction.

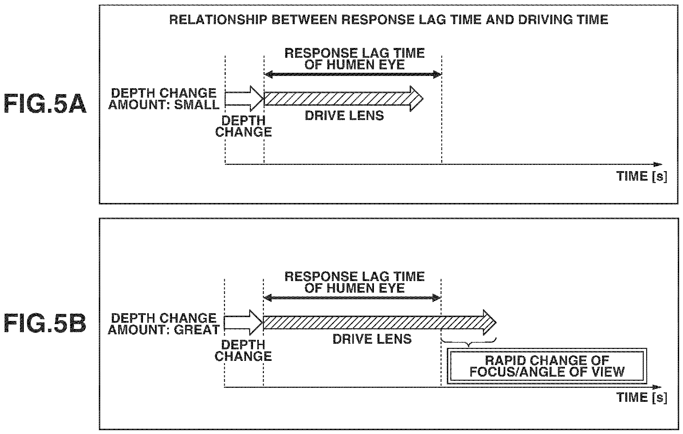

Figs. 5A and 5B are characteristic diagrams illustrating a relationship between a response lag time and a driving time. Fig. 5A illustrates a relationship between a response lag time of the user and a driving time of the optical elements 103a and 103b when a depth change amount is small. A horizontal axis represents time, and a vertical axis represents depth. After the depth change occurs, the optical elements 103a and 103b are driven by a driving distance based on the depth change amount. After the depth change occurs, a response lag time occurs in the eyes of the user gazing at a gazing point. In a case where the driving operation of the optical elements 103a and 103b is completed within the response lag time, the user is not aware of the changes of the focus and the angle of view caused by the driving operation executed on the optical elements 103a and 103b.

Fig. 5B illustrates a relationship between a response lag time of the user and a driving time of the optical elements 103a and 103b when a depth change amount is large. After the depth change occurs, the optical elements 103a and 103b are driven by a driving distance based on the depth change amount. After the depth change occurs, a response lag time occurs in the eyes of the user gazing at a gazing point. In a case where the depth change amount is large, i.e., a driving distance of the optical elements 103a and 103b is great, a driving time also becomes long. Therefore, the driving operation executed on the optical elements 103a and 103b cannot be completed within the response lag time. Because the driving operation of the optical elements 103a and 103b is continuously executed in a period when the user can respond, the user is aware of the changes of the focus and the angle of view. Although the user can clearly see the image when the focus distance is adjusted to the image through the driving operation executed on the optical elements 103a and 103b, the user may have a sense of discomfort because the image appears to be unnatural if the user is aware of the changes of the focus and the angle of view.

The depth acquisition unit 110 acquires a depth from the image acquired by the image acquisition unit 100, and the depth storage unit 111 stores the depth acquired by the depth acquisition unit 110. The depth acquisition unit 110 calculates a depth change amount based on the depth stored in the depth storage unit 111 and the depth acquired by the depth acquisition unit 110. The driving distance acquisition unit 112 calculates a driving distance of the visibility change driving units 104a and 104b based on the depth change amount calculated by the depth acquisition unit 110. Positions of the optical elements 103a and 103b corresponding to the depth may be calculated by using a predetermined function. Alternatively, a table describing a relationship between a depth change amount and a driving distance may be stored, and a driving distance may be determined by using this table instead of executing calculation.

The estimated value acquisition unit 113 calculates an estimated value Dp of a driving amount of each of the visibility change driving units 104a and 104b by using a driving distance L acquired by the driving distance acquisition unit 112. An estimated driving time Tp estimated based on a condition of the driving distance L and a driving speed V is used as the estimated value Dp. The driving distance L may directly be used as an estimated driving distance Lp instead of using the estimated driving time Tp. Hereinafter, a case is described where the estimated driving time Tp is used as the estimated value Dp.

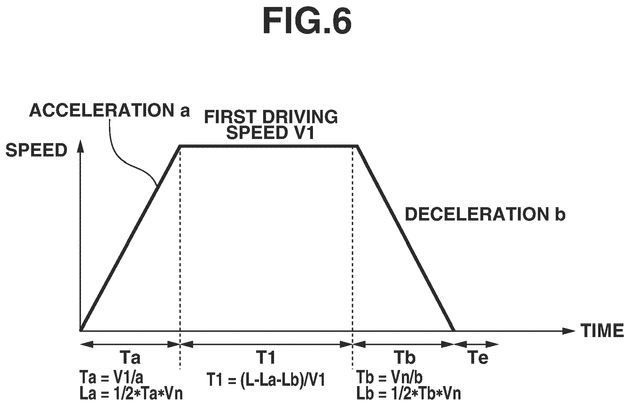

A calculation method of the estimated driving time Tp is described with reference to Fig. 6. Fig. 6 is a characteristic diagram illustrating transition of a driving speed when driving operation is executed on the optical element 103a (103b). A vertical axis represents driving speed, and a horizontal axis represents time.

As illustrated in Fig. 6, in a period from a start of the driving operation to an acceleration time Ta, the speed is accelerated to a first speed V1 with acceleration a. At this time, the acceleration time Ta can be calculated by an equation Ta = V1/a. A distance La by which the optical element 103a (103b) is moved within the acceleration time Ta can be calculated by an equation La = 1/2 × Ta × V1. When the speed has reached the first speed V1, the optical element 103a (103b) is driven at a constant speed, i.e., the first speed V1, in a constant speed driving time T1. When the constant speed driving time T1 has passed, the speed is decelerated with deceleration b (an absolute value of negative acceleration) for a deceleration time Tb, until the optical element 103a (103b) is stopped. At this time, the deceleration time Tb can be calculated by an equation Tb = V1/b. A distance Lb by which the optical element 103a (103b) is moved within the deceleration time Tb can be calculated by an equation Lb = 1/2 × Tb × V1. The constant speed driving time T1 can be calculated by an equation T1 = (L - La - Lb) / V1. Further, an error-compensation time taken to stop driving the optical element 103a (103b) is called Te. The error-compensation time Te may be a constant value, or may be changed based on the speed, the acceleration, and the deceleration. The estimated driving time Tp can be calculated by an equation Tp = Ta + T1 + Tb + Te.

In Fig. 6, the estimated driving time Tp is calculated based on a driving pattern called "trapezoidal driving". However, the estimated driving time Tp may be calculated based on another transition of speed. Further, the driving time corresponding to the driving speed and the driving distance may previously be measured and stored, and the estimated driving time Tp may be acquired based on the stored driving time corresponding to the driving distance.

The allowable value acquisition unit 114 calculates an allowable value Dt based on a depth change amount d acquired by the depth acquisition unit 110 and user information stored in the user information recording unit 115. An allowable driving time Tt is used as the allowable value Dt. The estimated driving distance Lp based on the driving distance L may be used instead of using the allowable driving time Tt. Hereinafter, a case is described where the allowable driving time Tt is used as the allowable value Dt.

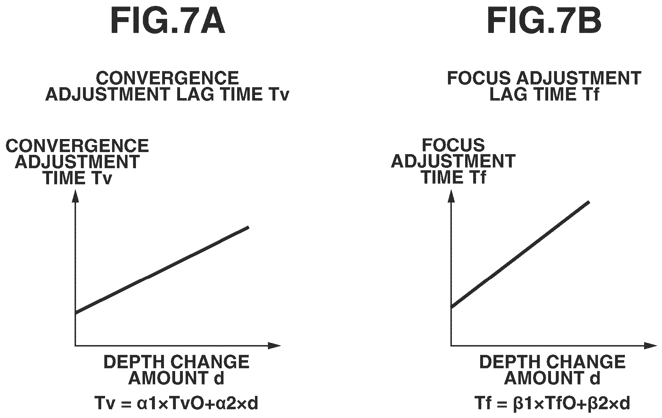

A calculation method of the estimated driving time Tp is described with reference to Figs. 7A and 7B. Figs. 7A and 7B are characteristic diagrams illustrating transition of a driving speed when driving operation is executed on the optical element 103a (103b). A vertical axis represents time, and the horizontal axis represents a depth change amount. The allowable driving time Tt is calculated based on a convergence adjustment lag time Tv and a focus adjustment lag time Tf.

Fig. 7A illustrates a convergence adjustment lag time Tv with respect to a depth change amount d. The convergence adjustment lag time Tv is expressed by a sum of a response lag time before the eyeball starts executing convergence adjustment and an adjustment time in which the eyeball executes the convergence adjustment. A value of the response lag time for the convergence adjustment is acquired by multiplying a fixed value Tv0 by a personal information coefficient α1 having a different value for each age. The convergence adjustment time of the eyeball is proportional to the depth change amount d. Therefore, a value of the convergence adjustment time is acquired by multiplying the depth change amount d by a personal information coefficient α2 having a different value for each age.

Therefore, the convergence adjustment lag time Tv can be expressed as Tv = α1 × Tv0 + α2 × d.

In order to acquire the convergence adjustment lag time Tv, a table describing a relationship between the depth change amount d and the convergence adjustment lag time Tv may be stored. Then, the convergence adjustment lag time Tv may be determined by using this table instead of executing the above-described calculation.

Fig. 7B illustrates a focus adjustment lag time Tf with respect to the depth change amount d. The focus adjustment lag time Tf is expressed by a sum of a response lag time before the eyeball (crystalline lens) starts executing focus adjustment and an adjustment time in which the eyeball executes the focus adjustment. A value of the focus adjustment lag time Tf is acquired by multiplying a fixed value Tf0 by a personal information coefficient β1 having a different value for each age. The focus adjustment time of the eyeball is proportional to the depth change amount d. Therefore, a value of the focus adjustment time is acquired by multiplying the depth change amount d by a personal information coefficient β2 having a different value for each age. Therefore, the focus adjustment lag time Tf can be expressed as Tf = β1 × Tf0 + β2 × d.

In order to acquire the focus adjustment lag time Tf, a table describing a relationship between the depth change amount d and the focus adjustment lag time Tf may be stored. Then, the focus adjustment lag time Tf may be determined by using this table instead of executing the above-described calculation.

The allowable driving time Tt is a time period when the human eyes cannot respond to the change because of the convergence adjustment and the focus adjustment. Therefore, even if the changes of the focus and the angle of view occur in the period because of the driving operation executed on the optical elements 103a and 103b, the user cannot be aware of the changes. The convergence adjustment and the focus adjustment are executed simultaneously and concurrently, and the user cannot be aware of the changes unless both of the adjustments are completed. Therefore, any one of the convergence adjustment lag time Tv and the focus adjustment lag time Tf having a value greater than the other is used as the allowable driving time Tt. Therefore, the allowable driving time Tt can be expressed as Tt = max(Tv, Tf).

Alternatively, the allowable driving time Tt may be shortened by expressing the allowable driving time Tt as Tt = min(Tv, Tf). Further, the calculation method is not limited to the above, and the convergence adjustment lag time Tv and the focus adjustment lag time Tf may be multiplied by a predetermined ratio and the resultants may be added up. As described above, by multiplying the convergence adjustment lag time Tv and the focus adjustment lag time Tf by the predetermined ratio, the allowable driving time Tt can be finely expressed, so that the estimated value Dp and the allowable value Dt can be compared and determined more accurately. By using ratios α3 and β3 for the above-described calculation, the allowable driving time Tt can be expressed as Tt = α3 × Tv + β3 × Tf.

A fixed value may be used as the allowable driving time Tt. Alternatively, a table describing a relationship between the depth change amount d and the allowable driving time Tt, or a table describing a relationship between the convergence adjustment lag time Tv and the focus adjustment lag time Tf, and the allowable driving time Tt may be stored. Then, the allowable driving time Tt may be determined by using this table instead of executing calculation.

In a case where the driving distance L is taken as an allowable driving distance Lt, and the allowable driving distance Lt is used as the allowable value Dt instead of using the allowable driving time Tt, calculating the allowable driving distance Lt for the above-described trapezoidal driving by using the allowable driving time Tt may be considered. Further, a table describing a relationship between the allowable driving time Tt and the allowable driving distance Lt may be stored. Then, the allowable driving distance Lt may be determined by using this table.

The control mode selection unit 116 compares the estimated value Dp acquired by the estimated value acquisition unit 113 and the allowable value Dt acquired by the allowable value acquisition unit 114 to select a control mode. In a case where the estimated driving time Tp is used as the estimated value Dp, the allowable driving time Tt is used as the allowable value Dt. In a case where the estimated driving distance Lp is used as the estimated value Dp, the allowable driving distance Lt is used as the allowable value Dt. The driving instruction unit 117 transmits the information about a control mode selected by the control mode selection unit 116 to the control apparatus 13.

In a case where the estimated value Dp is less than the allowable value Dt, the control mode selection unit 116 selects a first control mode. In a case where the estimated value Dp is greater than the allowable value Dt, the control mode selection unit 116 selects a second control mode. In the first control mode, the visibility change driving units 104a and 104b execute driving operation by using first parameters including a first speed, a first acceleration rate, and a first deceleration rate. In the second control mode, the visibility change driving units 104a and 104b execute driving operation by using second parameters including a second speed, a second acceleration rate, and a second deceleration rate. Herein, a value of each of the second parameters is less than or equal to a value of the corresponding first parameter, and a value of at least one of the second parameters is less than a value of the corresponding first parameter. In a case where the estimated value Dp and the allowable value Dt are equal to each other, any one of the first and the second control modes is selected. In this case, a control mode to be selected is previously prescribed.

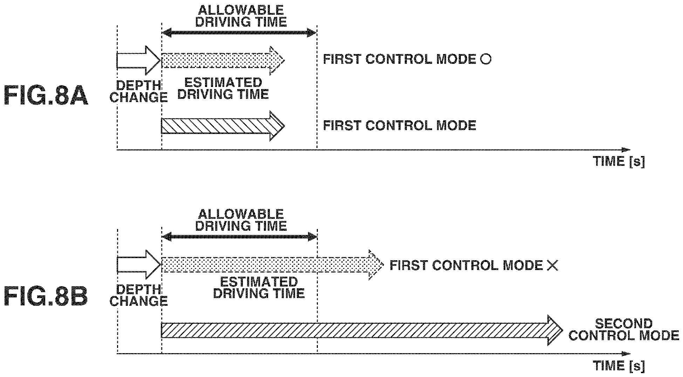

Figs. 8A and 8B are characteristic diagrams illustrating a state where the first control mode or the second control mode is selected by comparing the allowable driving time and the estimated driving time. Fig. 8A illustrates a state where the first control mode is selected, and Fig. 8B illustrates a state where the second control mode is selected. In each of Figs. 8A and 8B, a horizontal axis represents time, a white arrow indicates occurrence of a depth change, a dashed arrow indicates an estimated driving time, and a solid arrow indicates an allowable driving time. As the first control mode, an estimated driving time is calculated by using the first speed, the first acceleration, and the first deceleration.

In the example illustrated in Fig. 8A, the estimated driving time is kept within the allowable driving time. Therefore, the control mode selection unit 116 selects the first control mode, so that the driving operation of the optical elements 103a and 103b is executed with the first speed, the first acceleration, and the first deceleration. In this way, the driving operation executed on the optical elements 103a and 103b is completed within the allowable driving time, so that the visibility change driving units 104a and 104b can execute visibility adjustment without making the user be aware of the changes of the focus and the angle of view.

In the example illustrated in Fig. 8B, the estimated driving time exceeds the allowable driving time. Therefore, the control mode selection unit 116 selects the second control mode, so that the driving operation is executed on the optical elements 103a and 103b with the second speed, the second acceleration, and the second deceleration. At this time, at least one or more of the second speed, the second acceleration, and the second deceleration have a value (values) smaller than the corresponding value(s) of the first speed, the first acceleration, and the first deceleration.

By using the second control mode, the focus and the angle of view are moderately changed by the driving operation executed on the optical elements 103a and 103b. Therefore, even if the driving operation is continuously executed beyond the allowable driving time, the user is less aware of the changes of the focus and the angle of view. This is based on a human characteristic called "change blindness". The change blindness is a characteristic by which the human is less aware of a long-term change. The human can be aware of a change by recognizing memories of states before and after the change and a moment of the change. In a case where the change occurs moderately, the human is less aware of the change because recognition of the memories before and after the change and the moment of the change becomes difficult. In the present embodiment, in order to utilize this characteristic, a value (values) smaller than a value (values) of the first speed, the first acceleration, and the first deceleration is (are) used for any one or more of the second speed, the second acceleration, and the second deceleration. In this way, a period of time when the visibility change driving units 104a and 104b execute driving operation becomes long, and changes of the focus and the angle of view caused by the driving operation executed on the optical elements 103a and 103b become moderate, so that the user is less aware of the changes. In this way, the visibility change driving units 104a and 104b can execute visibility adjustment without making the user be aware of the changes of the focus and the angle of view.

### (Visibility Adjustment Method executed by Image Display Apparatus)

Hereinafter, a visibility adjustment method executed by the image display apparatus according to the present embodiment is described.

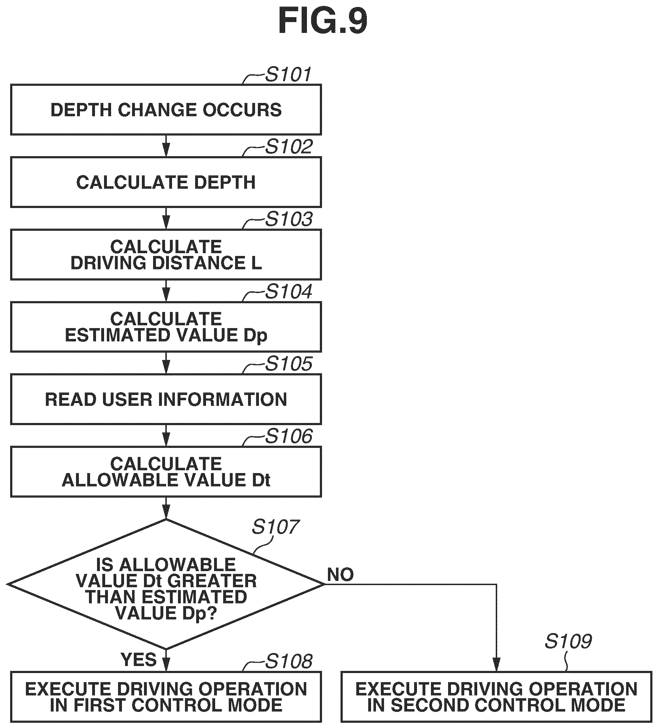

Fig. 9 is a flowchart illustrating a visibility adjustment method executed by the image display apparatus according to the present embodiment.

In step S101, a depth change of the gazing point occurs. With respect to the depth, a value at the center of the image may be used as illustrated in Figs. 2A and 2B, or a representative value to which the focus distance is to be adjusted may be previously programmed for each time. Then, the processing proceeds to step S102.

In step S102, the depth acquisition unit 110 acquires a depth after the change. The acquired depth is stored in the depth storage unit 111. The depth acquisition unit 110 calculates a depth change amount d based on the acquired depth and the depth stored in the depth storage unit 111. Then, the processing proceeds to step S103.

In step S103, the driving distance acquisition unit 112 calculates a driving distance L of each of the visibility change driving units 104a and 104b based on the depth change amount acquired by the depth acquisition unit 110. The driving distance L may be acquired by calculating the positions of the optical elements 103a and 103b corresponding to the depth by using a function. Alternatively, the driving distance L may be determined by using a table describing a relationship between the depth change amount and the driving distance. Then, the processing proceeds to step S104.

In step S104, the estimated value acquisition unit 113 calculates an estimated value Dp from the driving distance L acquired by the driving distance acquisition unit 112. An estimated driving time Tp, i.e., a driving time calculated from a driving distance, is used as the estimated value Dp. In addition, the driving distance may directly be used as the estimated driving distance Lp. Then, the processing proceeds to step S105.

In step S105, the allowable value acquisition unit 114 acquires user information from the user information recording unit 115. The user information may include information about age, eyesight, and presence or absence of eyesight correction tools. Then, the processing proceeds to step S106.

In step S106, the allowable value acquisition unit 114 calculates an allowable value Dt based on the depth change amount d acquired by the depth acquisition unit 110 and the user information stored in the user information recording unit 115. For example, an allowable driving time Tt is used as the allowable value Dt. The allowable driving time Tt can be acquired through the above-described method. The allowable driving time Tt is calculated based on the convergence adjustment lag time Tv and the focus adjustment lag time Tf. Then, the processing proceeds to step S107.

The allowable driving time Tt may be determined by using a table describing a relationship between the depth change amount d and the convergence adjustment lag time Tv or a table describing a relationship between the depth change amount d and the focus adjustment lag time Tf, instead of being acquired by the above-described calculation. Further, in a case where the driving distance L is taken as an allowable driving distance Lt, and the allowable driving distance Lt is used as the allowable value Dt instead of using the allowable driving time Tt, for example, the allowable driving distance Lt for the above-described trapezoidal driving executed at the first speed V may be calculated by using the allowable driving time Tt.

In step S107, the control mode selection unit 116 selects a control mode by comparing the estimated value Dp acquired by the estimated value acquisition unit 113 and the allowable value Dt acquired by the allowable value acquisition unit 114. In a case where the estimated driving time Tp is used as the estimated value Dp, the allowable driving time Tt is used as the allowable value Dt. In a case where the estimated driving distance Lp is used as the estimated value Dp, the allowable driving distance Lt is used as the allowable value Dt. In a case where the estimated value Dp is less than the allowable value Dt (YES in step S107), the control mode selection unit 116 selects the first control mode. Then, the processing proceeds to step S108.

In step S108, based on the control executed by the control apparatus 13, the visibility change driving units 104a and 104b respectively drive the optical elements 103a and 103b in the first control mode (the first speed, the first acceleration, and the first deceleration) selected in step S107.

In step S107, in a case where the estimated value Dp is greater than the allowable value Dt (NO in step S107), the control mode selection unit 116 selects the second control mode. Then, the processing proceeds to step S109.

In step S109, based on the control executed by the control apparatus 13, the visibility change driving units 104a and 104b respectively drive the optical elements 103a and 103b in the second control mode (the second speed, the second acceleration, and the second deceleration) selected in step S107.

As described above, according to the present embodiment, it is possible to realize an image display apparatus capable of displaying a sharp image by adjusting a focus distance to a stereoscopic image using parallax, without making a user be aware of the changes of the focus and the angle of view of the image caused by the driving operation executed on the optical elements 103a and 103b.

According to the present embodiment, a control mode is selected by acquiring and comparing the allowable driving time Tt and the estimated driving time Tp, or by acquiring and comparing the allowable driving distance Lt and the estimated driving distance Lp. In the present embodiment, a control mode is selected by making a comparison about whether a time necessary for a change of the position (i.e., driving time) exceeds a user's response lag time. Therefore, it is better to calculate and compare the times Tp and Tt in addition to comparing the distances Lt and Lp. In this way, determination can be executed more accurately. With consideration for the above points, a selection method of the control mode is not limited to the above-described two methods, and using both of the above-described methods is also taken into consideration.

Specifically, first, in steps S102 to S106, the allowable driving distance Lt and the estimated driving distance Lp are sequentially acquired. Then, in step S107, the allowable driving distance Lt and the estimated driving distance Lp are compared to each other. Then, when the need arises, for example, when the control mode selection unit 116 uses a predetermined threshold to determine that a comparison result is inaccurate, the control mode is selected by comparing the allowable driving time Tt and the estimated driving time Tp through the processing in steps S102 to S107. In this way, a calculation amount can be reduced while accurately selecting the control mode.

### [Variation Example]

Hereinafter, a variation example of the present embodiment is described. An image display apparatus disclosed in the present variation example can also support the user's eyesight different in the right and the left eyes.

A configuration of the image display apparatus according to the present variation example is similar to the general configuration in Fig. 1 described in the first embodiment.

A visibility adjustment method executed by the image display apparatus according to the present variation example is described with reference to Fig. 9 described in the first embodiment. In the present variation example, the visibility adjustment is executed on the left eye first, and on the right eye next. For example, by using a changeover switch (not illustrated), the user can set a left eye adjustment mode, a right eye adjustment mode, or a both-eye adjustment mode described in the first embodiment.

It is assumed that the processing in steps S101 and S102 illustrated in Fig. 9 is executed in a state where the user is gazing at one point regardless of the eyesight. Therefore, in a case where the visibility adjustment is sequentially executed on the left and the right eyes, it is sufficient that the processing in steps S101 and S102 is initially executed once. The processing in steps S101 and S102 does not have to be executed on the left and the right eyes individually.

In the present variation example, in step S101, a depth change of the gazing point occurs.

In step S102, the depth acquisition unit 110 acquires a depth after the change. The acquired depth is stored in the depth storage unit 111. The depth acquisition unit 110 calculates a depth change amount d based on the acquired depth and the depth stored in the depth storage unit 111.

### <Left Eye Adjustment Mode>

In step S103, with respect to the left eye 201a, the driving distance acquisition unit 112 calculates a driving distance La of the visibility change driving unit 104a arranged for the left eye 201a based on the depth change amount acquired by the depth acquisition unit 110.

In step S104, the estimated value acquisition unit 113 calculates an estimated value Dpa for the left eye 201a from the driving distance La acquired by the driving distance acquisition unit 112.

In step S105, the allowable value acquisition unit 114 acquires the user information from the user information recording unit 115.

In step S106, the allowable value acquisition unit 114 calculates an allowable value Dta for the left eye 201a based on the depth change amount d acquired by the depth acquisition unit 110 and the user information stored in the user information recording unit 115.

In step S107, the control mode selection unit 116 compares the estimated value Dpa acquired by the estimated value acquisition unit 113 and the allowable value Dta acquired by the allowable value acquisition unit 114 to select a control mode. In a case where an estimated driving time Tpa is used as the estimated value Dpa, an allowable driving time Tta is used as the allowable value Dta. In a case where an estimated driving distance Lpa is used as the estimated value Dpa, an allowable driving distance Lta is used as the allowable value Dta. In a case where the estimated value Dpa is less than the allowable value Dta (YES in step S107), the control mode selection unit 116 selects the first control mode. Then, the processing proceeds to step S108.

In step S108, based on the control executed by the control apparatus 13, the visibility change driving unit 104a arranged for the left eye 201a drives the optical element 103a arranged for the left eye 201a in the first control mode (the first speed, the first acceleration, and the first deceleration) selected in step S107.

In step S107, in a case where the estimated value Dpa is greater than the allowable value Dta (NO in step S107), the control mode selection unit 116 selects the second control mode. Then, the processing proceeds to step S109.

In step S109, based on the control executed by the control apparatus 13, the visibility change driving unit 104a arranged for the left eye 201a drives the optical element 103a arranged for the left eye 201a in the second control mode (the second speed, the second acceleration, and the second deceleration) selected in step S107.

### <Right Eye Adjustment Mode>

In step S103, with respect to the right eye 201b, the driving distance acquisition unit 112 calculates a driving distance Lb of the visibility change driving unit 104b arranged for the right eye 201b based on the depth change amount acquired by the depth acquisition unit 110.

In step S104, the estimated value acquisition unit 113 calculates an estimated value Dpb for the right eye 201b from the driving distance Lb acquired by the driving distance acquisition unit 112.

In step S105, the allowable value acquisition unit 114 acquires the user information from the user information recording unit 115.

In step S106, the allowable value acquisition unit 114 calculates an allowable value Dtb for the right eye 201b based on the depth change amount d acquired by the depth acquisition unit 110 and the user information stored in the user information recording unit 115.

In step S107, the control mode selection unit 116 compares the estimated value Dpb acquired by the estimated value acquisition unit 113 and the allowable value Dtb acquired by the allowable value acquisition unit 114 to select a control mode. In a case where an estimated driving time Tpb is used as the estimated value Dpb, the allowable driving time Ttb is used as the allowable value Dtb. In a case where an estimated driving distance Lpb is used as the estimated value Dpb, an allowable driving distance Ltb is used as the allowable value Dtb. In a case where the estimated value Dpb is less than the allowable value Dtb (YES in step S107), the control mode selection unit 116 selects the first control mode. Then, the processing proceeds to step S108.

In step S108, based on the control executed by the control apparatus 13, the visibility change driving unit 104b arranged for the right eye 201b drives the optical element 103b arranged for the right eye 201b in the first control mode (the first speed, the first acceleration, and the first deceleration) selected in step S107.

In step S107, in a case where the estimated value Dpb is greater than the allowable value Dtb (NO in step S107), the control mode selection unit 116 selects the second control mode. Then, the processing proceeds to step S109.

In step S109, based on the control executed by the control apparatus 13, the visibility change driving unit 104b arranged for the right eye 201b drives the optical element 103b arranged for the right eye 201b in the second control mode (the second speed, the second acceleration, and the second deceleration) selected in step S107.

As described above, according to the present variation example, it is possible to execute accurate visibility adjustment on each of the right and the left eyes even in a case where the user's eyesight is different in the right and the left eyes. In other words, it is possible to realize an image display apparatus capable of displaying a sharp image by adjusting a focus distance to a stereoscopic image using parallax for each of the right and the left eyes, without making a user be aware of the changes of the focus and the angle of view of the image caused by the driving operation executed on the optical elements.

In the present variation example, the processing in steps S103 to S106 is executed in the left eye adjustment mode first, and the processing in steps S103 to S106 is executed in the right eye adjustment mode next. Thereafter, the processing in steps S107 to S109 may be executed on the right and the left eyes simultaneously.

Further, similar to the first embodiment, in the present variation example, both of the method for selecting a control mode by acquiring and comparing the allowable driving time Tt and the estimated driving time Tp and the method for selecting a control mode by acquiring and comparing the allowable driving distance Lt and the estimated driving distance Lp may be executed.

Next, a second embodiment according to the present disclosure is described.

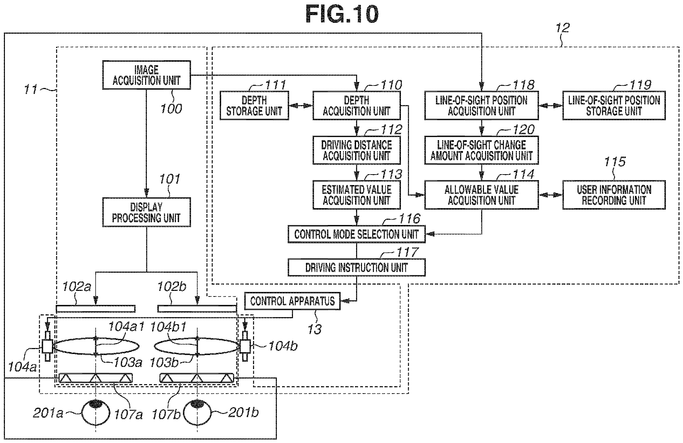

Fig. 10 is a schematic diagram illustrating a general configuration of the image display apparatus according to the present embodiment.

### (Configuration of Image Display Apparatus)

As illustrated in Fig. 10, in addition to the configuration in Fig. 1 described in the first embodiment, in the image display apparatus according to the present embodiment, the image display unit 11 includes line-of-sight detection units 107a and 107b, and the movement driving unit 12 includes a line-of-sight position acquisition unit 118, a line-of-sight position storage unit 119, and a line-of-sight change amount acquisition unit 120.

The line-of-sight detection unit 107a (107b) includes a camera and an infrared illumination unit, and is arranged on a side closer to the user's eye 201a (201b) than the optical element 103a (103b). The line-of-sight detection unit 107a (107b) acquires an eyeball image through the camera by illuminating the eye 201a (201b) with infrared light emitted from the infrared illumination unit, and detects changes of a gazing point and a line-of-sight direction of the user's eye 201a (201b). The line-of-sight position acquisition unit 118 determines a position of the gazing point from detection results acquired by the line-of-sight detection units 107a and 107b. The line-of-sight position storage unit 119 stores a position of the gazing point acquired by the line-of-sight position acquisition unit 118. The line-of-sight change amount acquisition unit 120 calculates a line-of-sight change amount e from the line-of-sight position stored in the line-of-sight storage unit 119 and the ling-of-sight position calculated by the line-of-sight position acquisition unit 118. An angle at which the line-of-sight direction is changed, a moving distance of the gazing point in the image space, or a moving distance on each of the image display parts 102a and 102b can be used as the line-of-sight change amount e.

### (Visibility Adjustment Method executed by Image Display Apparatus)

Hereinafter, a visibility adjustment method executed by the image display apparatus according to the present embodiment is described.

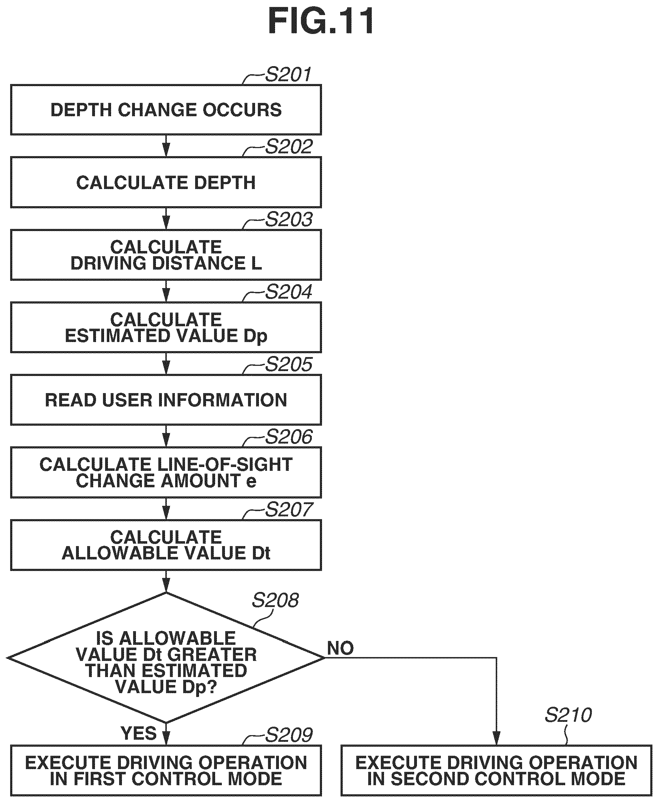

Fig. 11 is a flowchart illustrating a visibility adjustment method executed by the image display apparatus according to the present embodiment. In Fig. 11, the same reference numerals are applied to the constituent elements that are the same as those in Fig. 1, and detailed descriptions thereof are omitted.

In step S201, a depth change of the gazing point occurs. With respect to the depth, a value at the center of the image may be used as illustrated in Figs. 2A and 2B, or a representative value to which the focus distance is to be adjusted may be previously programmed for each time. Further, as illustrated in Figs. 3A and 3B, a depth change occurring at a gazing point may be detected by setting a line-of-sight position acquired by the line-of-sight position acquisition unit 118 as a gazing point. Then, the processing proceeds to step S202.

The processing in steps S202 to S205 is similar to the processing in steps S102 to S105 in Fig. 9 described in the first embodiment.

In step S206, the line-of-sight change amount acquisition unit 120 calculates a line-of-sight change amount e from the line-of-sight position acquired by the line-of-sight position acquisition unit 118. Then, the processing proceeds to step S207.

In step S207, based on the depth change amount d acquired by the depth acquisition unit 110, the user information stored in the user information recording unit 115, and the line-of-sight change amount e acquired by the line-of-sight change amount acquisition unit 120, the allowable value acquisition unit 114 calculates the allowable value Dt. The allowable driving time Tt is calculated as the allowable value Dt. The allowable driving time Tt is calculated based on the convergence adjustment lag time Tv, the focus adjustment lag time Tf, and a line-of-sight movement lag time Tm. The convergence adjustment lag time Tv and the focus adjustment lag time Tf are acquired through a method similar to the method described in the first embodiment.

The line-of-sight movement lag time Tm is a response lag time after the change of the line-of-sight direction occurs. The line-of-sight movement lag time Tm is a value acquired by adding a value acquired by multiplying a fixed value Tm0 by a personal information coefficient γ1 having a different value for each age and a value acquired by multiplying the line-of-sight change amount e by a personal information coefficient γ2 having a different value for each age. The value acquired by multiplying the line-of-sight change amount e by the personal information coefficient γ2 is proportional to the line-of-sight change amount e depending on a moving distance of the line-of-sight. Therefore, the line-of-sight movement lag time Tm can be expressed as Tm = γ1 × Tm0 + γ2 × e. An angle at which the line-of-sight direction is changed, or a distance by which the line-of-sight direction is changed may be used as the line-of-sight change amount e.

The allowable driving time Tt is calculated based on the convergence adjustment lag time Tv, the focus adjustment lag time Tf, and the line-of-sight movement lag time Tm. It is thought that the line-of-sight is moved first, and convergence adjustment and focus adjustment are executed thereafter. Therefore, the allowable driving time Tt is a value acquired by adding the convergence adjustment lag time Tv, the focus adjustment lag time Tf, and the line-of-sight movement lag time Tm. Any one of the convergence adjustment lag time Tv and the focus adjustment lag time Tf having a value greater than the other is used. Therefore, the allowable driving time Tt can be expressed as Tt = max(Tv, Tf) + Tm.

Alternatively, the allowable driving time Tt may be shortened by expressing the allowable driving time Tt as Tt = min(Tv, Tf) + Tm. The calculation method is not limited to the above, and the convergence adjustment lag time Tv, the focus adjustment lag time Tf, and the line-of-sight movement lag time Tm may respectively be multiplied by predetermined ratios and the resultants may be added up. As described above, by multiplying the convergence adjustment lag time Tv, the focus adjustment lag time Tf, and the line-of-sight movement lag time Tm by the predetermined ratios, the allowable driving time Tt can finely be expressed, so that the estimated value Dp and the allowable value Dt can be compared and determined more accurately. By using ratios α3, β3, and γ3 for the above-described calculation, the allowable driving time Tt can be expressed as Tt = α3 × Tv + β3 × Tf + γ3 × Tm.

A fixed value may be used as the allowable driving time Tt. Alternatively, a table describing a relationship between the depth change amount d and the allowable driving time Tt, or a table describing a relationship between the convergence adjustment lag time Tv and the focus adjustment lag time Tf, and the allowable driving time Tt may be stored. Then, the allowable driving time Tt may be determined by using the table instead of executing calculation.

In a case where the driving distance L is taken as an allowable driving distance Lt, and the allowable driving distance Lt is used as the allowable value Dt instead of using the allowable driving time Tt, calculating the allowable driving distance Lt for the above-described trapezoidal driving by using the allowable driving time Tt may be considered. Further, a table describing a relationship between the allowable driving time Tt and the allowable driving distance Lt may be stored. Then, the allowable driving distance Lt may be determined by using this table. In a case where the estimated driving distance Lp is used as the estimated value Dp, the allowable driving distance Lt is used as the allowable value Dt.

The processing in steps S208 to S210, executed after the processing in step S207, is similar to the processing in steps S107 to S109 in Fig. 9 described in the first embodiment.

As described above, according to the present embodiment, a control mode is selected with consideration for the line-of-sight movement lag time acquired from the line-of-sight change amount. Through the above-described processing, it is possible to realize an image display apparatus capable of displaying a sharp image by adjusting a focus distance to a stereoscopic image using parallax, without making a user be aware of the changes of the focus and the angle of view of the image caused by the driving operation executed on the optical elements more reliably.

Further, similar to the first embodiment, in the present embodiment, both of the method for selecting a control mode by acquiring and comparing the allowable driving time Tt and the estimated driving time Tp and the method for selecting a control mode by acquiring and comparing the allowable driving distance Lt and the estimated driving distance Lp may be executed.

In this way, a calculation amount can be reduced while accurately selecting the control mode.

Further, in the present embodiment, similar to the variation example of the first embodiment, the left eye visibility adjustment and the right eye visibility adjustment may independently be executed in order to support the user's eyesight different in the right and the left eyes. Through the above-described configuration, it is possible to realize an image display apparatus capable of displaying a sharp image by adjusting a focus distance to a stereoscopic image using parallax for each of the right and the left eyes, without making a user be aware of the changes of the focus and the angle of view of the image caused by the driving operation executed on the optical elements.

In the above-described embodiments and the variation example, reduction of driving sound generated when the optical elements 103a and 103b are moved and driven by the visibility change driving units 104a and 104b may be taken into consideration. The image display apparatus generates driving sound when the visibility adjustment is executed at a great driving speed. Therefore, in the above-described embodiments and the variation example, for example, a threshold of a driving time, necessary to drive the optical elements 103a and 103b at a driving speed the user is not aware of the driving sound (or the user does not notice the driving sound), is previously defined. In a case where the first control mode is selected by the control mode selection unit 116 when visibility adjustment is to be executed, the driving operation is executed at the first speed, the first acceleration, and the first deceleration, by which the estimated driving time, which falls within a range of the allowable driving time, can satisfy a value greater than or equal to the threshold. By executing control as described above, it is possible to display a sharp image by executing visibility adjustment without making a user be aware of the changes of a focus and an angle of view of the image caused by relative movement of the image display parts and the optical elements, while suppressing the driving sound generated when the visibility adjustment is executed.

Disclosure of the embodiments and the variation example includes the following configurations and the method.

### (Configuration 1)

An image display apparatus includes image display parts, optical elements, and a movement driving unit configured to change relative positions of the image display parts and the optical elements, the movement driving unit including an estimated value acquisition unit configured to acquire an estimated value with respect to a change of the relative positions, an allowable value acquisition unit configured to acquire an allowable value with respect to a change of the relative positions, and a control mode selection unit configured to select any one of a plurality of control modes for controlling the movement driving unit based on a result of comparison between the estimated value and the allowable value.

### (Configuration 2)

The image display apparatus according to Configuration 1, wherein the estimated value is a value of at least one of an estimated driving distance for the change of the relative positions and an estimated driving time necessary for the change of the relative positions.

### (Configuration 3)

The image display apparatus according to Configuration 1 or 2, wherein the allowable value is a value of at least one of an allowable driving distance for the change of the relative positions and an allowable driving time necessary for the change of the relative positions.

### (Configuration 4)

The image display apparatus according to Configuration 3, wherein the allowable value is a value acquired by using user information of a user.

### (Configuration 5)

The image display apparatus according to Configuration 4, wherein the user information includes a convergence adjustment time of user's eyes, a focus adjustment time of the user's eyes, a user's age, and user's eyesight.

### (Configuration 6)

The image display apparatus according to Configuration 3, wherein the allowable driving time is a response lag time of the user's eyes, and the allowable driving distance is a distance acquired by using the allowable driving time.

### (Configuration 7)

The image display apparatus according to any one of Configurations 1 to 6, wherein the movement driving unit further includes a depth acquisition unit configured to acquire a depth change amount from an image displayed on the image display parts, and wherein the estimated value and the allowable value are values acquired by using the depth change amount.

### (Configuration 8)

The image display apparatus according to any one of Configurations 1 to 7, wherein the plurality of control modes includes a first control mode for driving the movement driving unit with first parameters including a first driving speed, a first acceleration and a first deceleration, in a case where relative positions of the image display parts and the optical elements are changed.

### (Configuration 9)

The image display apparatus according to Configuration 8, wherein the control mode selection unit selects the first control mode in a case where the estimated value is less than the allowable value.

### (Configuration 10)

The image display apparatus according to Configuration 8, wherein the plurality of control modes include a second control mode for driving the movement driving unit with second parameters including a second driving speed, a second acceleration, and a second deceleration, in a case where relative positions of the image display parts and the optical elements are changed, wherein each of the second parameters is less than or equal to a corresponding one of the first parameters, and wherein at least one of the second parameters is less than the corresponding first parameter.

### (Configuration 11)

The image display apparatus according to Configuration 10, wherein the control mode selection unit selects the second control mode in a case where the estimated value is greater than the allowable value.

### (Configuration 12)

The image display apparatus according to any one of Configurations 1 to 11, further includes a line-of-sight detection unit configured to detect a change of a user's line-of-sight direction. The movement driving unit further includes a line-of-sight position acquisition unit configured to acquire a line-of-sight position from a detection result acquired by the line-of-sight detection unit, a storage unit configured to store the line-of-sight position, and a line-of-sight change amount acquisition unit configured to acquire a line-of-sight change amount from the line-of-sight position acquired by the line-of-sight position acquisition unit and the line-of-sight position stored in the storage unit.

### (Configuration 13)

The image display apparatus according to any one of Configurations 1 to 12, further includes a left eye adjustment mode and a right eye adjustment mode, wherein the movement driving unit driven in the left eye adjustment mode causes the estimated value acquisition unit to acquire the estimated value with respect to a change of the relative positions for a user's left eye, and causes the allowable value acquisition unit to acquire the allowable value with respect to a change of the relative positions for the user's left eye, wherein the movement driving unit driven in the right eye adjustment mode causes the estimated value acquisition unit to acquire the estimated value with respect to a change of the relative positions for a user's right eye, and causes the allowable value acquisition unit to acquire the allowable value with respect to a change of the relative positions for the user's right eye, and wherein the control mode selection unit sequentially or simultaneously selects any one of the plurality of control modes for the user's right and left eyes, based on a result of comparison between the estimated value and the allowable value.

### (Method 1)

An adjustment method of an image display apparatus in a case where relative positions of image display parts and optical elements are changed, the adjustment method includes acquiring an estimated value with respect to a change of the relative positions, acquiring an allowable value with respect to a change of the relative positions, and selecting any one of a plurality of control modes for controlling movement driving of the relative positions based on a result of comparison between the estimated value and the allowable value.

According to the present disclosure, it is possible to realize an image display apparatus capable of displaying a sharp image by executing visibility adjustment without making a user be aware of changes of a focus and an angle of view of the image caused by relative movement of the image display parts and the optical elements.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. An image display apparatus comprising:
image display parts;
optical elements; and
movement driving means for changing relative positions of the image display parts and the optical elements,
the movement driving means including:
estimated value acquisition means for acquiring an estimated value with respect to a change of the relative positions;
allowable value acquisition means for acquiring an allowable value with respect to a change of the relative positions; and
control mode selection means for selecting any one of a plurality of control modes for controlling the movement driving means based on a result of comparison between the estimated value and the allowable value.

2. The image display apparatus according to Claim 1, wherein the estimated value is a value of at least one of an estimated driving distance for the change of the relative positions and an estimated driving time necessary for the change of the relative positions.

3. The image display apparatus according to Claim 1, wherein the allowable value is a value of at least one of an allowable driving distance for the change of the relative positions and an allowable driving time necessary for the change of the relative positions.

4. The image display apparatus according to Claim 3, wherein the allowable value is a value acquired by using user information of a user.

5. The image display apparatus according to Claim 4, wherein the user information includes a convergence adjustment time of user's eyes, a focus adjustment time of the user's eyes, a user's age, and user's eyesight.

6. The image display apparatus according to Claim 3, wherein the allowable driving time is a response lag time of the user's eyes, and the allowable driving distance is a distance acquired by using the allowable driving time.

7. The image display apparatus according to Claim 1,
wherein the movement driving means further includes depth acquisition means for acquiring a depth change amount from an image displayed on the image display parts, and
wherein the estimated value and the allowable value are values acquired by using the depth change amount.

8. The image display apparatus according to Claim 1, wherein the plurality of control modes includes a first control mode for driving the movement driving means with first parameters including a first driving speed, a first acceleration, and a first deceleration, in a case where relative positions of the image display parts and the optical elements are changed.

9. The image display apparatus according to Claim 8, wherein the control mode selection means selects the first control mode in a case where the estimated value is less than the allowable value.

10. The image display apparatus according to Claim 8,
wherein the plurality of control modes include a second control mode for driving the movement driving means with second parameters including a second driving speed, a second acceleration, and a second deceleration, in a case where relative positions of the image display parts and the optical elements are changed,
wherein each of the second parameters is less than or equal to a corresponding one of the first parameters, and
wherein at least one of the second parameters is less than the corresponding first parameter.

11. The image display apparatus according to Claim 10, wherein the control mode selection means selects the second control mode in a case where the estimated value is greater than the allowable value.

12. The image display apparatus according to Claim 1, further comprising line-of-sight detection means for detecting a change of a user's line-of-sight direction,
the movement driving means further including:
line-of-sight position acquisition means for acquiring a line-of-sight position from a detection result acquired by the line-of-sight detection means;
storage means for storing the line-of-sight position; and
line-of-sight change amount acquisition means for acquiring a line-of-sight change amount from the line-of-sight position acquired by the line-of-sight position acquisition means and the line-of-sight position stored in the storage means.

13. The image display apparatus according to Claim 1, further comprising a left eye adjustment mode and a right eye adjustment mode,
wherein the movement driving means driven in the left eye adjustment mode causes:
the estimated value acquisition means to acquire the estimated value with respect to a change of the relative positions for a user's left eye; and
the allowable value acquisition means to acquire the allowable value with respect to a change of the relative positions for the user's left eye,
wherein the movement driving means driven in the right eye adjustment mode causes:
the estimated value acquisition means to acquire the estimated value with respect to a change of the relative positions for a user's right eye; and
the allowable value acquisition means to acquire the allowable value with respect to a change of the relative positions for the user's right eye, and
wherein the control mode selection means sequentially or simultaneously selects any one of the plurality of control modes for the user's right and left eyes, based on a result of comparison between the estimated value and the allowable value.

14. An adjustment method of an image display apparatus in a case where relative positions of image display parts and optical elements are changed, the adjustment method comprising:
acquiring an estimated value with respect to a change of the relative positions;
acquiring an allowable value with respect to a change of the relative positions; and
selecting any one of a plurality of control modes for controlling movement driving of the relative positions based on a result of comparison between the estimated value and the allowable value.
